# EUROPEAN PATENT APPLICATION

(11) **EP 4 332 672 A1**
(43) Date of publication of application: **06.03.2024**
(21) Application number: 23193007.4
(22) Date of filing: 23.08.2023
(51) Int. Cl.: G02F 1/29, G02F 1/01, G02F 1/133

(54) **ENHANCED GRIN LC LENS RESPONSE TIME USING TEMPERATURE CONTROL**

(30) Priority: 30.08.2022 US 202263402347 P; 11.04.2023 US 202318298662
(71) Applicant: Meta Platforms Technologies, LLC, Menlo Park, CA 94025 (US)
(72) Inventor: REZNIKOV, Dmytro Y, Menlo Park, 94025 (US); JAMALI, Afsoon, Menlo Park, 94025 (US); BOROMAND, Arman, Menlo Park, 94025 (US); SHARMA, Robin, Menlo Park, 94025 (US)
(74) Representative: Murgitroyd & Company

(57) **Abstract**

A system includes (a) an optical device having a GRIN LC lens, the GRIN LC lens including a liquid crystal layer, (b) a sensor configured to assess an attribute of the liquid crystal layer, (c) a heat source, and (d) a controller configured to mediate heat flow between the heat source and the liquid crystal layer based on a signal provided by the sensor.

## Description

### BACKGROUND

Across various optical engineering applications including eyeglasses, contact lenses, and vision correction elements in augmented reality (AR) and virtual reality (VR) systems, liquid crystal (LC) lenses may provide a number of advantages due to their electrically tunable focusing capability, where the associated optical mechanism is based on a spatially localized modulation of light speed resulting from LC molecular orientations driven by an applied electric field.

In such context, and as will be appreciated, the realization of a continuous distribution of phase retardation across larger aperture (> 10 mm) LC lenses may be challenged by the limited birefringence (< 0.4) of LC materials as well as their mechanically compliant nature.

### SUMMARY

In accordance with a first aspect of the present disclosure, there is provided an optical device comprising: a lens including a liquid crystal layer disposed between a pair of optical substrates; a sensor configured to assess at least one attribute of the liquid crystal layer; a heat source; and a controller configured to mediate heat flow between the heat source and the liquid crystal layer based on a signal provided by the sensor.

In some embodiments, the sensor comprises a refractometer.

In some embodiments, the sensor comprises a thermometer.

In some embodiments, the at least one attribute of the liquid crystal layer is selected from the group consisting of viscosity, refractive index, and temperature.

In some embodiments, the heat source is selected from the group consisting of a power supply, a display element, and a projector.

In some embodiments, the controller is configured to mediate the heat flow in an amount effective to increase a temperature of the liquid crystal layer by up to approximately 20°C and change a refractive index of the liquid crystal layer by less than approximately 0.1.

In some embodiments, the controller is configured to mediate the heat flow in an amount effective to decrease a response time of the lens by at least approximately 1 ms.

In accordance with a second aspect of the present disclosure, there is provided an optical device comprising: a liquid crystal lens comprising: a first optical substrate; a second optical substrate overlying and spaced away from the first optical substrate; a liquid crystal (LC) layer disposed between the first and second optical substrates; a first electrode structure between the LC layer and the first optical substrate; and a second electrode structure between the LC layer and the second optical substrate; a sensor configured to assess at least one attribute of the liquid crystal layer; a heat source; and a controller configured to mediate heat flow between the heat source and the liquid crystal layer based on a signal provided by the sensor.

In some embodiments, the optical device further comprising: a first dielectric layer disposed between the first electrode structure and the liquid crystal layer; and a second dielectric layer disposed between the second electrode structure and the liquid crystal layer.

In some embodiments, the liquid crystal lens comprises an optical aperture having mutually orthogonal lateral dimensions each measuring at least approximately 10 mm.

In some embodiments, the first optical substrate and the second optical substrate each have a thickness independently ranging from approximately 100 to 300 micrometers.

In some embodiments, the first electrode structure and the second electrode structure each comprise an optically transparent conductive layer.

In some embodiments, the first electrode structure and the second electrode structure are each disposed within an optical aperture of the liquid crystal lens.

In accordance with a third aspect of the present disclosure, there is provided a method comprising: forming an optical device comprising: a lens including a liquid crystal layer disposed between optical substrates; a sensor configured to assess an attribute of the liquid crystal layer; a heat source; and a controller configured to mediate heat flow between the heat source and the liquid crystal layer based on a signal provided by the sensor; and directing heat from the heat source to the liquid crystal layer in an amount effective to change the attribute of the liquid crystal layer.

In some embodiments, directing heat from the heat source to the liquid crystal layer increases a temperature of the liquid crystal layer by up to approximately 20°C.

In some embodiments, directing heat from the heat source to the liquid crystal layer increases a temperature of the liquid crystal layer to a value less than a clearing point (Tc) of the liquid crystal.

In some embodiments, directing heat from the heat source to the liquid crystal layer decreases a viscosity of the liquid crystal layer by an amount of from approximately 1% to approximately 40%.

In some embodiments, directing heat from the heat source to the liquid crystal layer changes a refractive index of the liquid crystal layer by less than approximately 0.1.

In some embodiments, directing heat from the heat source to the liquid crystal layer decreases a response time of the lens by at least approximately 1 ms.

In some embodiments, directing heat from the heat source to the liquid crystal layer decreases a response time of the lens to less than approximately 100 ms.

### BRIEF DESCRIPTION OF DRAWINGS

The accompanying drawings illustrate a number of exemplary embodiments and are a part of the specification. Together with the following description, these drawings demonstrate and explain various principles of the present disclosure.
FIG. 1 illustrates a portion of an example GRIN LC lens stack having a liquid crystal layer disposed between a patterned electrode and a ground electrode according to some embodiments.
FIG. 2 is a cross-sectional view of a GRIN LC lens stack including an array of spacer elements disposed between first and second optical substrates and a metallization architecture for applying an electric field across a liquid crystal layer located between the substrates according to some embodiments.
FIG. 3 shows a cross-sectional view of an optical system having a thermally monitored and temperature controlled liquid crystal layer according to some embodiments.
FIG. 4 is a plot showing the temperature effects on refractive index and viscosity for a representative liquid crystal composition according to various embodiments.
FIG. 5 is an illustration of exemplary augmented-reality glasses that may be used in connection with embodiments of this disclosure.
FIG. 6 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

Across various optical engineering applications including eyeglasses, contact lenses, and vision correction elements in augmented reality (AR) and virtual reality (VR) systems, liquid crystal (LC) lenses may provide a number of advantages due to their electrically tunable focusing capability, where the associated optical mechanism is based on a spatially localized modulation of light speed resulting from LC molecular orientations driven by an applied electric field.

In such context, and as will be appreciated, the realization of a continuous distribution of phase retardation across larger aperture (> 10 mm) LC lenses may be challenged by the limited birefringence (< 0.4) of LC materials as well as their mechanically compliant nature. In some embodiments, a gradient-index configuration may be used to provide tunability of focus quality.

Gradient refractive index (GRIN) optics refers to a branch of optics where optical effects are produced by a spatial gradient in the refractive index of a material. A gradual refractive index variation may be used to manufacture lenses having planar surfaces, for example, or to reduce aberrations in imaging applications. In an LC lens having an axial gradient configuration, the refractive index may vary along the optical axis of an inhomogeneous medium such that surfaces of constant index are planes that are oriented perpendicular to the optical axis. In a radial/cylindrical refractive index gradient configuration, on the other hand, the index profile may vary continuously from a centerline of the optical axis to the periphery along the transverse direction in such a way that surfaces of constant index are concentric cylinders located about the optical axis. Hybrid GRIN LC lenses having both an axial and a radial/cylindrical refractive index gradient configuration are also contemplated.

A gradient refractive index lens utilizes a spatially-defined refractive index gradient across the viewing aperture of the lens to impart an optical phase profile at a selected design wavelength. In particular examples, a GRIN lens may have a planar form factor, such as a disk shape, and lensing performance that may be improved relative to lenses formed from a material having a single, spatially-invariant index, such as comparative lenses made from glass or quartz.

GRIN-type varifocal LC lenses may be configured to exhibit a gradient distribution of refractive index in response to a spatially inhomogeneous electric field that is applied across the LC layer(s). As such, the lens power of a GRIN-type LC lens may also be continuously tunable. In some instantiations, there may be a continuous variation of the refractive index within the lens material. An LC lens may be configured in both planar and nonplanar (e.g., concave or convex) geometries.

In some systems, a tunable architecture may include a plurality of discrete, ring electrodes formed over the LC layer(s) within the optical aperture of the lens. During operation, a different voltage may be applied to each electrode, which may be used to locally tune the refractive index of the LC material. The patterning of multiple electrodes, however, may create manufacturing challenges and also induce performance liabilities, including a loss of transmission, a decrease in focal power, and/or the generation of optical artifacts such as haze and/or ghosting due to angular diffraction arising from sub-critical electrode dimensions or the gap between neighboring electrodes. In some embodiments, the inter-electrode gaps across the viewing aperture of a varifocal GRIN LC lens may be greater than approximately 1 micrometer.

As used herein, the terms "haze" and "clarity" may refer to optical phenomena associated with the transmission of light through a material, and may be attributed, for example, to the refraction of light within the material, e.g., due to secondary phases or porosity and/or the reflection of light from one or more surfaces of the material. As will be appreciated by those skilled in the art, haze may be associated with an amount of light that is subject to wide angle scattering (i.e., at an angle greater than 2.5° from normal) and a corresponding loss of transmissive contrast, whereas clarity may relate to an amount of light that is subject to narrow angle scattering (i.e., at an angle less than 2.5° from normal) and an attendant loss of optical sharpness or "see through quality."

The present disclosure is generally directed to a GRIN LC lens having rapidly switchable operation, and more particularly to a system including a GRIN LC lens where a temperature of the liquid crystal material is monitored and controlled in a manner effective to tune the switching speed and/or refractive index of the liquid crystal. A heat source suitable for supplying heat to an LC layer may include an element that is indigenous to the system, such as a power supply, display element, or projector.

According to some embodiments, a GRIN LC lens may include a first optical substrate, a second optical substrate overlying and spaced away from at least a portion of the first optical substrate, a liquid crystal layer disposed between the first optical substrate and the second optical substrate, a first electrode layer disposed between the liquid crystal layer and the first optical substrate, and a second electrode layer disposed between the liquid crystal layer and the second optical substrate. The optical substrates may include high transmissivity and low haze glass substrates, for example.

The first and second optical substrates may be transparent and may define an optical aperture of a GRIN LC lens. As used herein, an "optical" substrate may be characterized by a transmissivity within the visible light spectrum of at least approximately 80%, e.g., 80, 90, 95, 97, or 99%, including ranges between any of the foregoing values, and less than approximately 10% bulk haze, e.g., 0, 1, 2, 4, 6, or 8% bulk haze, including ranges between any of the foregoing values.

The first and second electrode layers may each independently include one or more transparent conductive oxide (TCO) such as indium oxide, tin oxide, indium tin oxide (ITO), indium gallium zinc oxide (IGZO), and the like. In some examples, the electrodes (e.g., a first patterned electrode layer and a second patterned electrode layer) may have a thickness of approximately 1 nm to approximately 1000 nm, with an example thickness of approximately 10 nm to approximately 50 nm.

In some embodiments, a GRIN LC lens may further include a layer of a dielectric or insulating material located between each electrode and the LC layer. The presence or absence of a dielectric or insulating layer may be used to locally vary the magnitude or direction of an electric field applied to the liquid crystal, and correspondingly tune the LC layer's refractive index and/or birefringence. Example dielectric layers may include organic materials such as polyimide or inorganic materials such as silicon dioxide.

Liquid crystals may exhibit optical anisotropy or birefringence (Δn). Birefringence, the average refractive index, and the temperature gradients of refractive indices of various liquid crystals may be determined experimentally or empirically. When light propagates through an anisotropic medium such as a liquid crystal, it will be divided into two rays that travel through the material at different velocities. Thus, the material may be characterized by different refractive indices, the ordinary index (nₒ), and extraordinary index (nₑ), where the difference is defined as birefringence or double refraction (Δn = nₑ - nₒ). Depending on the values of nₑ and nₒ, birefringence can be positive or negative.

Example liquid crystal compositions include nematic liquid crystals, including ordinary nematic phase liquid crystals and twisted nematic phase (cholesteric) liquid crystals, although further classifications are contemplated. A liquid crystal is typically transparent or translucent and may be configured to cause the polarization of light waves that pass through the liquid to change. The extent of the change in polarization may be a function of the intensity of an applied electric field.

Liquid crystals may be used in electro-optic elements and devices (e.g., switchable lenses) due to their anisotropic refractive indices and the ability to reorient in response to an applied voltage. A liquid crystal layer can provide a variable lens element using a variety of different approaches to change the optical path length through a lens. Example LC lens platforms include a concave or convex solid LC lens, an LC diffractive zone plate, where lensing is induced when the LC is switched to create a phase grating, a Fresnel shaped LC lens, and an electrode patterned LC lens.

Some lens designs (such as a solid LC lens) may be characterized by slower switching times due to greater LC cell gaps. Faster times for switching the lens ON can generally be achieved by increasing the applied voltage. Additionally or alternatively, a dual frequency LC may be used where changing the frequency of the applied field changes the response of the LC.

Without wishing to be bound by theory, temperature may play a fundamental role in affecting the refractive indices of liquid crystals. As the temperature increases, ordinary (nₒ) and extraordinary (nₑ) refractive indices of LCs typically behave differently from each other. Moreover, an increasing temperature may decrease the viscosity of a liquid crystal material, which may result in faster switching speeds in certain applications.

A temperature of the liquid crystal material may be monitored and controlled in a manner effective to tune its viscosity and hence the switching speed of the lens. With low voltage operation, economical fabrication, and relatively high switching speed, such lenses and lens systems may be applied in many modern optical and photonic devices.

In accordance with various embodiments, an optical device may include a lens having a liquid crystal layer disposed between a pair of optical substrates, a sensor configured to assess at least one attribute of the liquid crystal layer, a heat source, and a controller configured to mediate heat flow between the heat source and the liquid crystal layer based on a signal provided by the sensor. Example sensors may include thermometers and refractometers.

According to still further embodiments, an optical device may include a liquid crystal lens including (a) a first optical substrate, (b) a second optical substrate overlying and spaced away from the first optical substrate, (c) a liquid crystal (LC) layer disposed between the first and second optical substrate, (d) a first electrode structure between the LC layer and the first optical substrate, and (e) a second electrode structure between the LC layer and the second optical substrate, a sensor configured to assess at least one attribute of the liquid crystal layer, a heat source, and a controller configured to mediate heat flow between the heat source and the liquid crystal layer based on a signal provided by the sensor.

A controller may be configured to mediate the heat flow in an amount effective to increase a temperature of the liquid crystal layer by as much as approximately 20°C, while changing a refractive index of the liquid crystal layer by less than approximately 0.1. In particular embodiments, the controller may be configured to mediate heat flow in an amount effective to decrease a response time of the lens by at least approximately 1 ms.

Re-directed heat from the heat source may increase a temperature of the liquid crystal layer and correspondingly decrease its viscosity. For instance, a temperature of the liquid crystal layer may be increased to a value less than a clearing point (T_{c}) of the liquid crystal, and the viscosity of the liquid crystal layer may be decreased by at least 1%, e.g., 1, 2, 4, 10, 20, 30, or 40%, including ranges between any of the foregoing values.

A method may include forming an optical device having (a) a lens including a liquid crystal layer disposed between optical substrates, (b) a sensor configured to assess an attribute of the liquid crystal layer, (c) a heat source, and (d) a controller configured to mediate heat flow between the heat source and the liquid crystal layer based on a signal provided by the sensor, and directing heat from the heat source to the liquid crystal layer in an amount effective to change the attribute of the liquid crystal layer.

In accordance with various embodiments, a GRIN LC lens may be incorporated into an optical element such as AR eyeglasses or a VR headset. A temperature sensing element and a control element may be used to respectively detect a temperature of the liquid crystal material and adjust the flow of heat into or out of the LC layer. According to particular embodiments, other components within the optical element, such as power supplies or projectors, may be configured also as a heat source to heat the LC material.

Features from any of the embodiments described herein may be used in combination with one another in accordance with the general principles described herein. These and other embodiments, features, and advantages will be more fully understood upon reading the following detailed description in conjunction with the accompanying drawings and claims.

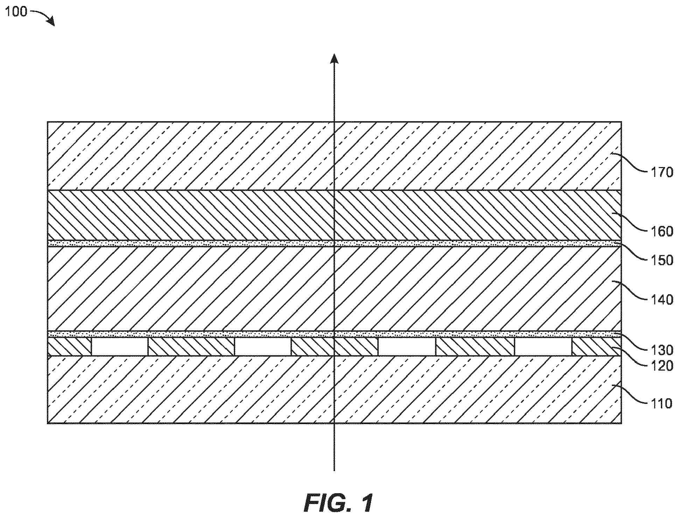

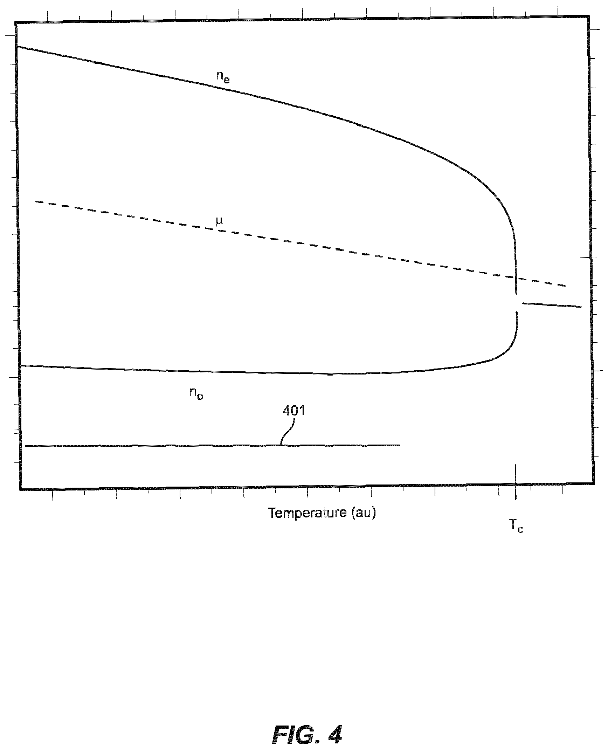

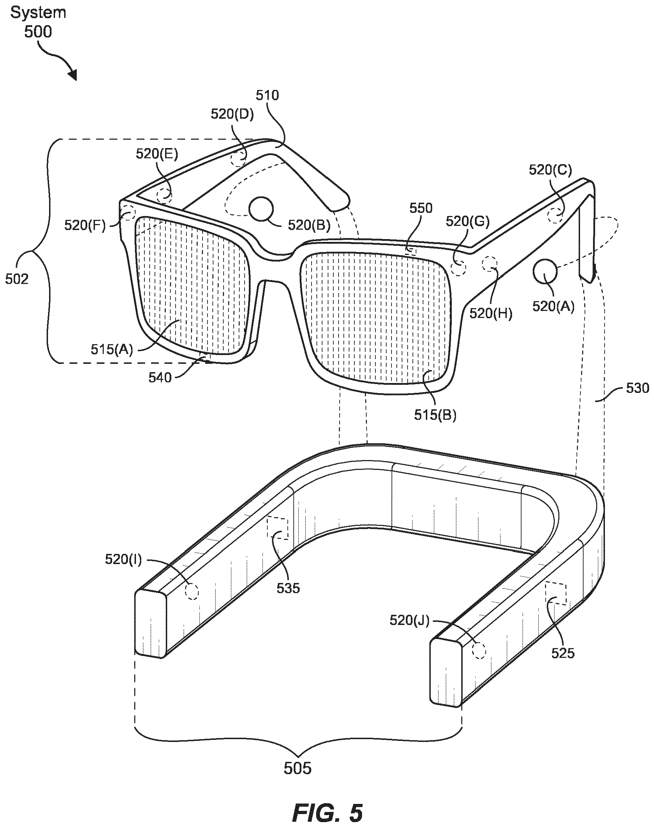

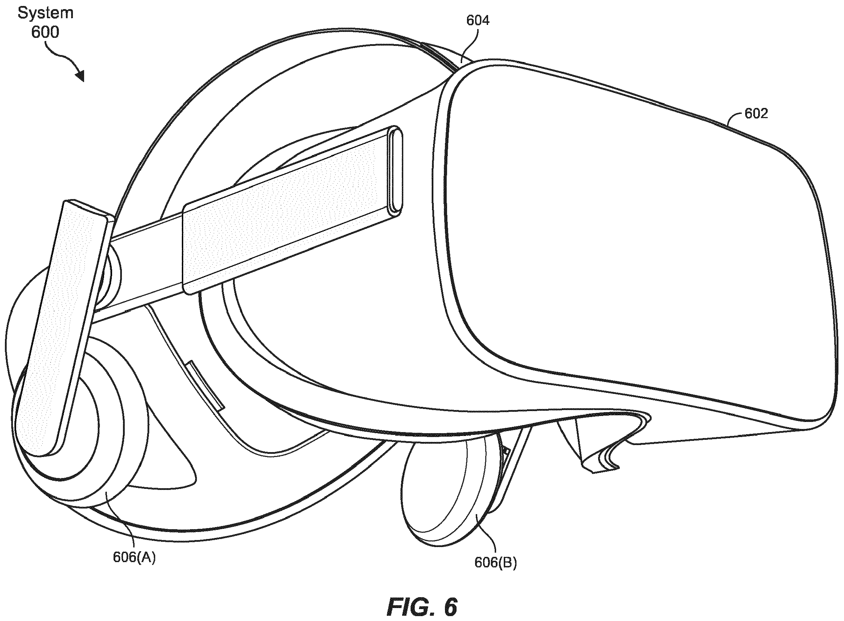

The following will provide, with reference to FIGS. 1-6, a detailed description of graded refractive index (GRIN) liquid crystal lenses. The discussion associated with FIGS. 1-3 relates to exemplary GRIN LC lens architectures using temperature control. The discussion associated with FIG. 4 includes a description of the influence of temperature on the refractive index and viscosity of a liquid crystal material. The discussion associated with FIGS. 5 and 6 relates to exemplary virtual reality and augmented reality devices that may include one or more GRIN LC lenses as disclosed herein.

Referring to FIG. 1, shown is a schematic cross-sectional illustration of a portion of a GRIN LC lens. GRIN LC lens 100 includes a first optical substrate 110, a second optical substrate 170 overlying and spaced away from at least a portion of the first optical substrate 110, a liquid crystal layer 140 disposed between the first optical substrate and the second optical substrate, a patterned electrode layer 120 disposed between the liquid crystal layer 140 and the first optical substrate 110, and a grounded electrode layer 160 disposed between the liquid crystal layer 140 and the second optical substrate 170. Optional insulating layers 130, 150 may be disposed between the patterned electrode 120 and the liquid crystal layer 140 and between the liquid crystal layer 140 and the grounded electrode 160, respectively. Insulating layers 130, 150 may include an optical quality polymer, such as polyimide, and may be configured to mediate the magnitude of the electric field applied to the liquid crystal layer.

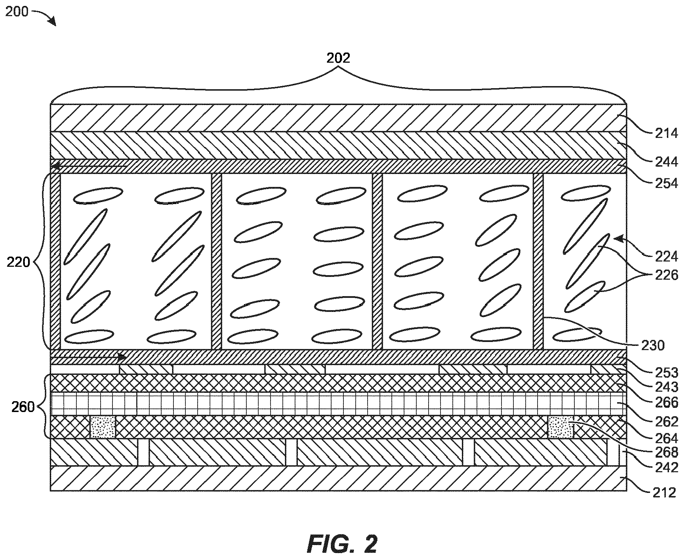

Turning to FIG. 2, shown is a cross-sectional view of a segment of an example GRIN LC lens 200 having an optical aperture 202. The GRIN LC lens includes a pair of optical substrates 212, 214 defining a liquid crystal-filled cell gap 220 located between the substrates. The substrates 212, 214 may be formed from glass or another optically transparent and insulating material and may each have a thickness ranging from approximately 100 to 300 micrometers, e.g., 100, 150, 200, 250, or 300 micrometers, including ranges between any of the foregoing values.

In the illustrated embodiment, a liquid crystal layer 224 is disposed within the cell gap 220, and an array of spacers 230 extends across the cell gap 220 and is configured to maintain a uniform spacing between the substrates 212, 214. Further, an electrode architecture may be configured to apply an electrical bias across the cell gap 220 to tune the orientation of liquid crystal molecules 226 within the liquid crystal layer 224.

Each substrate 212, 214 may be metallized with a respective electrode 242, 244, and a further electrode layer 243 may be disposed adjacent to the liquid crystal layer 224. Electrode layers 242, 243 may be patterned, e.g., to overlie discrete portions of the liquid crystal layer 224 between the spacers 230. Example electrode materials include transparent conductive oxides, such as indium tin oxide (ITO).

The electrode layers 243, 244 are each insulated from the liquid crystal layer 224 by a respective cell gap-facing dielectric layer 253, 254, such as a polyimide layer. Opposing ends of the spacers 230 may directly contact each of the dielectric layers. The GRIN LC lens 200 may additionally include a metallization architecture 260 including a bus line 262 disposed between insulating layers 264, 266 that is electrically connected to selected regions of the electrodes 242, 243, e.g., through conductive vias 268 for providing an electrical voltage to selected regions of the liquid crystal layer 224. Relative to comparative GRIN LC lenses, the presently-disclosed lens architectures may exhibit improved optical performance, including decreased bulk haze and parallax, as well as improved manufacturability and cost.

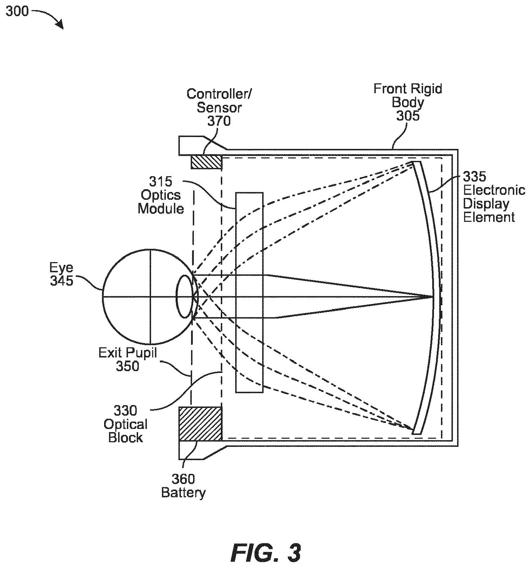

Referring to FIG. 3, shown is a schematic cross-sectional view of a VR headset that includes a GRIN LC lens according to some embodiments. The VR headset 300 has a front rigid body 305 that includes an optical block 330 that provides altered image light to an exit pupil 350. The exit pupil 350 is positioned proximate to the position of an eye 345 of a user when the user is wearing headset 300. For purposes of illustration, Fig. 3 shows a cross section associated with a single eye 345, but another optical block, separate from the optical block 330, may provide altered image light to a second eye of the user.

In the illustrated configuration, the optical block 330 includes an electronic display element 335 and an optics module 315. The electronic display element 335 may include one or more electronic display panels (not separately shown). The electronic display panels may be, e.g., flat panels, cylindrically curved panels, or spherically curved panels. The electronic display panels may include a panel mounting surface and a panel display surface. The panel mounting surface may couple to the front rigid body 305. The panel display surface may be adapted to emit image light.

According to various embodiments, the electronic display element 335 may emit image light toward the optics module 315, which may be configured to magnify the image light, and in some embodiments, also correct for one or more additional optical aberrations (e.g., astigmatism, etc.). During operation, the optics module 315 directs the image light to the exit pupil 350 for presentation to the user.

The optics module 315 may include one or more optical elements (not individually shown). An optical element may include an aperture, a Fresnel lens, a GRIN LC lens, a convex lens, a concave lens, a filter, or any other suitable optical element that is configured to affect the image light emitted from the electronic display element 335. In particular embodiments, optics module 315 may include a GRIN LC lens such as GRIN LC lens 100 or GRIN LC lens 200, for example. Moreover, the optics module 315 may include combinations of different optical elements.

The optics module 315 may be configured to correct one or more types of optical aberration. Examples of optical aberration include: two dimensional optical aberrations, three dimensional optical aberrations, or some combination thereof. Two dimensional optical aberrations are errors that occur in two dimensions. Example types of two dimensional optical aberrations include: barrel distortion, pincushion distortion, longitudinal chromatic aberration, transverse chromatic aberration, or any other type of two-dimensional optical aberration. Three dimensional optical aberrations are errors that occur in three dimensions. Example types of three dimensional optical aberrations include spherical aberration, comatic aberration, field curvature, astigmatism, or any other type of three-dimensional optical aberration.

The VR headset 300 may additionally include a battery 360 for providing power to one or more headset components. In addition to providing power, a battery may constitute a heat source. A controller/sensor 370 may be configured to assess a property or state of one or more of the headset components, including the performance or one or more properties of a GRIN LC lens. In some embodiments, example processes may be integrated with a real-time feedback loop that is configured to assess one or more attributes of a GRIN LC lens, such as the viscosity, refractive index, and/or temperature of the LC medium, and accordingly adjust one or more operational variables, including the temperature of a heat source or an amount of heat conveyed from the heat source to the liquid crystal layer.

When light propagates through anisotropic media such as liquid crystals, it will be divided into rays that travel through the material at different velocities. Hence, such a material may be characterized by different refractive indices, including an ordinary index (nₒ) and an extraordinary index (nₑ), where their difference is the birefringence (Δn=nₑ - nₒ).

The refractive indices of liquid crystals are fundamentally governed by temperature. With increasing temperature, for instance, ordinary (nₒ) and extraordinary (nₑ) refractive indices of LCs behave differently yet typically converge proximate to the clearing point (T_{c}), which corresponds to the phase transformation from the liquid crystal phase to an isotropic liquid.

Referring to FIG. 4, a semi-quantitative plot shows the effects of temperature on the refractive index as well as the dynamic viscosity of a representative liquid crystal. In certain embodiments, a method may include increasing the temperature of the LC layer within a GRIN LC lens without undergoing the liquid crystal-to-liquid phase transformation. Referring still to FIG. 4, for such a process, an operational temperature range may be depicted by bar 401, which corresponds to temperatures for which both the indices of refraction (nₒ and nₑ) and the dynamic viscosity (µ) vary approximately linearly with a change in temperature.

As disclosed herein, the response time of a gradient-index (GRIN) liquid crystal (LC) lens may be improved by controlling the temperature of the liquid crystal medium. In some embodiments, the viscoelasticity and hence the switching speed of the liquid crystal may be thermally tuned during operation, which may beneficially impact performance of the lens. Additionally, the refractive index of the liquid crystal medium may be controlled.

A suitable source of heat to affect thermal control may include indigenous lens components such as a power supply (e.g., battery), display element, or projector. An example GRIN LC lens may include a temperature sensing element and a related control system for monitoring the temperature of the LC medium and mediating the ingress and output of heat flow.

### Example Embodiments

Example 1: An optical device includes a lens having a liquid crystal layer disposed between a pair of optical substrates, a sensor configured to assess at least one attribute of the liquid crystal layer, a heat source, and a controller configured to mediate heat flow between the heat source and the liquid crystal layer based on a signal provided by the sensor.
Example 2: The optical device of Example 1, where the sensor includes a refractometer.
Example 3: The optical device of any of Examples 1 and 2, where the sensor includes a thermometer.
Example 4: The optical device of any of Examples 1-3, where the at least one attribute of the liquid crystal layer is selected from viscosity, refractive index, and temperature.
Example 5: The optical device of any of Examples 1-4, where the heat source is selected from a power supply, a display element, and a projector.
Example 6: The optical device of any of Examples 1-5, where the controller is configured to mediate the heat flow in an amount effective to increase a temperature of the liquid crystal layer by up to approximately 20°C and change a refractive index of the liquid crystal layer by less than approximately 0.1.
Example 7: The optical device of any of Examples 1-6, where the controller is configured to mediate the heat flow in an amount effective to decrease a response time of the lens by at least approximately 1 ms.
Example 8: An optical device includes a liquid crystal lens including (a) a first optical substrate, (b) a second optical substrate overlying and spaced away from the first optical substrate, (c) a liquid crystal (LC) layer disposed between the first and second optical substrate, (d) a first electrode structure between the LC layer and the first optical substrate, and (e) a second electrode structure between the LC layer and the second optical substrate, a sensor configured to assess at least one attribute of the liquid crystal layer, a heat source, and a controller configured to mediate heat flow between the heat source and the liquid crystal layer based on a signal provided by the sensor.
Example 9: The optical device of Example 8, further including a first dielectric layer disposed between the first electrode structure and the liquid crystal layer and a second dielectric layer disposed between the second electrode structure and the liquid crystal layer.
Example 10: The optical device of any of Examples 8 and 9, where the liquid crystal lens includes an optical aperture having mutually orthogonal lateral dimensions each measuring at least approximately 10 mm.
Example 11: The optical device of any of Examples 8-10, where the first optical substrate and the second optical substrate each have a thickness independently ranging from approximately 100 to 300 micrometers.
Example 12: The optical device of any of Examples 8-11, where the first electrode structure and the second electrode structure each include an optically transparent conductive layer.
Example 13: The optical device of any of Examples 8-12, where the first electrode structure and the second electrode structure are each disposed within an optical aperture of the liquid crystal lens.
Example 14: A method includes forming an optical device having (a) a lens including a liquid crystal layer disposed between optical substrates, (b) a sensor configured to assess an attribute of the liquid crystal layer, (c) a heat source, and (d) a controller configured to mediate heat flow between the heat source and the liquid crystal layer based on a signal provided by the sensor, and directing heat from the heat source to the liquid crystal layer in an amount effective to change the attribute of the liquid crystal layer.
Example 15: The method of Example 14, where directing heat from the heat source to the liquid crystal layer increases a temperature of the liquid crystal layer by up to approximately 20°C.
Example 16: The method of any of Examples 14 and 15, where directing heat from the heat source to the liquid crystal layer increases a temperature of the liquid crystal layer to a value less than a clearing point (T_{c}) of the liquid crystal.
Example 17: The method of any of Examples 14-16, where directing heat from the heat source to the liquid crystal layer decreases a viscosity of the liquid crystal layer by an amount of from approximately 1% to approximately 40%.
Example 18: The method of any of Examples 14-17, where directing heat from the heat source to the liquid crystal layer changes a refractive index of the liquid crystal layer by less than approximately 0.1.
Example 19: The method of any of Examples 14-18, where directing heat from the heat source to the liquid crystal layer decreases a response time of the lens by at least approximately 1 ms.
Example 20: The method of any of Examples 14-19, where directing heat from the heat source to the liquid crystal layer decreases a response time of the lens to less than approximately 100 ms.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 500 in FIG. 5) orthat visually immerses a user in an artificial reality (such as, e.g., virtual-reality system 600 in FIG. 6). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 5, augmented-reality system 500 may include an eyewear device 502 with a frame 510 configured to hold a left display device 515(A) and a right display device 515(B) in front of a user's eyes. Display devices 515(A) and 515(B) may act together or independently to present an image or series of images to a user. While augmented-reality system 500 includes two displays, embodiments of this disclosure may be implemented in augmented-reality systems with a single NED or more than two NEDs.

In some embodiments, augmented-reality system 500 may include one or more sensors, such as sensor 540. Sensor 540 may generate measurement signals in response to motion of augmented-reality system 500 and may be located on substantially any portion of frame 510. Sensor 540 may represent one or more of a variety of different sensing mechanisms, such as a position sensor, an inertial measurement unit (IMU), a depth camera assembly, a structured light emitter and/or detector, or any combination thereof. In some embodiments, augmented-reality system 500 may or may not include sensor 540 or may include more than one sensor. In embodiments in which sensor 540 includes an IMU, the IMU may generate calibration data based on measurement signals from sensor 540. Examples of sensor 540 may include, without limitation, accelerometers, gyroscopes, magnetometers, other suitable types of sensors that detect motion, sensors used for error correction of the IMU, or some combination thereof.

In some examples, augmented-reality system 500 may also include a microphone array with a plurality of acoustic transducers 520(A)-520(J), referred to collectively as acoustic transducers 520. Acoustic transducers 520 may represent transducers that detect air pressure variations induced by sound waves. Each acoustic transducer 520 may be configured to detect sound and convert the detected sound into an electronic format (e.g., an analog or digital format). The microphone array in FIG. 5 may include, for example, ten acoustic transducers: 520(A) and 520(B), which may be designed to be placed inside a corresponding ear of the user, acoustic transducers 520(C), 520(D), 520(E), 520(F), 520(G), and 520(H), which may be positioned at various locations on frame 510, and/or acoustic transducers 520(I) and 520(J), which may be positioned on a corresponding neckband 505.

In some embodiments, one or more of acoustic transducers 520(A)-(J) may be used as output transducers (e.g., speakers). For example, acoustic transducers 520(A) and/or 520(B) may be earbuds or any other suitable type of headphone or speaker.

The configuration of acoustic transducers 520 of the microphone array may vary. While augmented-reality system 500 is shown in FIG. 5 as having ten acoustic transducers 520, the number of acoustic transducers 520 may be greater or less than ten. In some embodiments, using higher numbers of acoustic transducers 520 may increase the amount of audio information collected and/or the sensitivity and accuracy of the audio information. In contrast, using a lower number of acoustic transducers 520 may decrease the computing power required by an associated controller 550 to process the collected audio information. In addition, the position of each acoustic transducer 520 of the microphone array may vary. For example, the position of an acoustic transducer 520 may include a defined position on the user, a defined coordinate on frame 510, an orientation associated with each acoustic transducer 520, or some combination thereof.

Acoustic transducers 520(A) and 520(B) may be positioned on different parts of the user's ear, such as behind the pinna, behind the tragus, and/or within the auricle or fossa. Or, there may be additional acoustic transducers 520 on or surrounding the ear in addition to acoustic transducers 520 inside the ear canal. Having an acoustic transducer 520 positioned next to an ear canal of a user may enable the microphone array to collect information on how sounds arrive at the ear canal. By positioning at least two of acoustic transducers 520 on either side of a user's head (e.g., as binaural microphones), augmented-reality device 500 may simulate binaural hearing and capture a 3D stereo sound field around about a user's head. In some embodiments, acoustic transducers 520(A) and 520(B) may be connected to augmented-reality system 500 via a wired connection 530, and in other embodiments acoustic transducers 520(A) and 520(B) may be connected to augmented-reality system 500 via a wireless connection (e.g., a BLUETOOTH connection). In still other embodiments, acoustic transducers 520(A) and 520(B) may not be used at all in conjunction with augmented-reality system 500.

Acoustic transducers 520 on frame 510 may be positioned in a variety of different ways, including along the length of the temples, across the bridge, above or below display devices 515(A) and 515(B), or some combination thereof. Acoustic transducers 520 may also be oriented such that the microphone array is able to detect sounds in a wide range of directions surrounding the user wearing the augmented-reality system 500. In some embodiments, an optimization process may be performed during manufacturing of augmented-reality system 500 to determine relative positioning of each acoustic transducer 520 in the microphone array.

In some examples, augmented-reality system 500 may include or be connected to an external device (e.g., a paired device), such as neckband 505. Neckband 505 generally represents any type or form of paired device. Thus, the following discussion of neckband 505 may also apply to various other paired devices, such as charging cases, smart watches, smart phones, wrist bands, other wearable devices, hand-held controllers, tablet computers, laptop computers, other external compute devices, etc.

As shown, neckband 505 may be coupled to eyewear device 502 via one or more connectors. The connectors may be wired or wireless and may include electrical and/or non-electrical (e.g., structural) components. In some cases, eyewear device 502 and neckband 505 may operate independently without any wired or wireless connection between them. While FIG. 5 illustrates the components of eyewear device 502 and neckband 505 in example locations on eyewear device 502 and neckband 505, the components may be located elsewhere and/or distributed differently on eyewear device 502 and/or neckband 505. In some embodiments, the components of eyewear device 502 and neckband 505 may be located on one or more additional peripheral devices paired with eyewear device 502, neckband 505, or some combination thereof.

Pairing external devices, such as neckband 505, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 500 may be provided by a paired device or shared between a paired device and an eyewear device, thus reducing the weight, heat profile, and form factor of the eyewear device overall while still retaining desired functionality. For example, neckband 505 may allow components that would otherwise be included on an eyewear device to be included in neckband 505 since users may tolerate a heavier weight load on their shoulders than they would tolerate on their heads. Neckband 505 may also have a larger surface area over which to diffuse and disperse heat to the ambient environment. Thus, neckband 505 may allow for greater battery and computation capacity than might otherwise have been possible on a stand-alone eyewear device. Since weight carried in neckband 505 may be less invasive to a user than weight carried in eyewear device 502, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 505 may be communicatively coupled with eyewear device 502 and/or to other devices. These other devices may provide certain functions (e.g., tracking, localizing, depth mapping, processing, storage, etc.) to augmented-reality system 500. In the embodiment of FIG. 5, neckband 505 may include two acoustic transducers (e.g., 520(I) and 520(J)) that are part of the microphone array (or potentially form their own microphone subarray). Neckband 505 may also include a controller 525 and a power source 535.

Acoustic transducers 520(I) and 520(J) of neckband 505 may be configured to detect sound and convert the detected sound into an electronic format (analog or digital). In the embodiment of FIG. 5, acoustic transducers 520(I) and 520(J) may be positioned on neckband 505, thereby increasing the distance between the neckband acoustic transducers 520(I) and 520(J) and other acoustic transducers 520 positioned on eyewear device 502. In some cases, increasing the distance between acoustic transducers 520 of the microphone array may improve the accuracy of beamforming performed via the microphone array. For example, if a sound is detected by acoustic transducers 520(C) and 520(D) and the distance between acoustic transducers 520(C) and 520(D) is greater than, e.g., the distance between acoustic transducers 520(D) and 520(E), the determined source location of the detected sound may be more accurate than if the sound had been detected by acoustic transducers 520(D) and 520(E).

Controller 525 of neckband 505 may process information generated by the sensors on neckband 505 and/or augmented-reality system 500. For example, controller 525 may process information from the microphone array that describes sounds detected by the microphone array. For each detected sound, controller 525 may perform a direction-of-arrival (DOA) estimation to estimate a direction from which the detected sound arrived at the microphone array. As the microphone array detects sounds, controller 525 may populate an audio data set with the information. In embodiments in which augmented-reality system 500 includes an inertial measurement unit, controller 525 may compute all inertial and spatial calculations from the IMU located on eyewear device 502. A connector may convey information between augmented-reality system 500 and neckband 505 and between augmented-reality system 500 and controller 525. The information may be in the form of optical data, electrical data, wireless data, or any other transmittable data form. Moving the processing of information generated by augmented-reality system 500 to neckband 505 may reduce weight and heat in eyewear device 502, making it more comfortable to the user.

Power source 535 in neckband 505 may provide power to eyewear device 502 and/or to neckband 505. Power source 535 may include, without limitation, lithium ion batteries, lithium-polymer batteries, primary lithium batteries, alkaline batteries, or any other form of power storage. In some cases, power source 535 may be a wired power source. Including power source 535 on neckband 505 instead of on eyewear device 502 may help better distribute the weight and heat generated by power source 535.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 600 in FIG. 6, that mostly or completely covers a user's field of view. Virtual-reality system 600 may include a front rigid body 602 and a band 604 shaped to fit around a user's head. Virtual-reality system 600 may also include output audio transducers 606(A) and 606(B). Furthermore, while not shown in FIG. 6, front rigid body 602 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 500 and/or virtual-reality system 600 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 500 and/or virtual-reality system 600 may include microLED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 500 and/or virtual-reality system 600 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50±5, i.e., values within the range 45 to 55.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to a liquid crystal material that comprises a cyanobiphenyl compound include embodiments where a liquid crystal material consists essentially of a cyanobiphenyl compound and embodiments where a liquid crystal material consists of a cyanobiphenyl compound.

## Claims

1. An optical device comprising:
a lens including a liquid crystal layer disposed between a pair of optical substrates;
a sensor configured to assess at least one attribute of the liquid crystal layer;
a heat source; and
a controller configured to mediate heat flow between the heat source and the liquid crystal layer based on a signal provided by the sensor.

2. The optical device of claim 1, wherein the sensor comprises a refractometer.

3. The optical device of claim 1 or 2, wherein the sensor comprises a thermometer.

4. The optical device according to any of the preceding claims, wherein the at least one attribute of the liquid crystal layer is selected from the group consisting of viscosity, refractive index, and temperature.

5. The optical device according to any of the preceding claims, wherein the heat source is selected from the group consisting of a power supply, a display element, and a projector.

6. The optical device according to any of the preceding claims, wherein the controller is configured to mediate the heat flow in an amount effective to increase a temperature of the liquid crystal layer by up to approximately 20°C and change a refractive index of the liquid crystal layer by less than approximately 0.1.

7. The optical device according to any of the preceding claims, wherein the controller is configured to mediate the heat flow in an amount effective to decrease a response time of the lens by at least approximately 1 ms.

8. An optical device comprising:
a liquid crystal lens comprising:
a first optical substrate;
a second optical substrate overlying and spaced away from the first optical substrate;
a liquid crystal (LC) layer disposed between the first and second optical substrates;
a first electrode structure between the LC layer and the first optical substrate; and
a second electrode structure between the LC layer and the second optical substrate;
a sensor configured to assess at least one attribute of the liquid crystal layer;
a heat source; and
a controller configured to mediate heat flow between the heat source and the liquid crystal layer based on a signal provided by the sensor.

9. The optical device of claim 8, further comprising:
a first dielectric layer disposed between the first electrode structure and the liquid crystal layer; and
a second dielectric layer disposed between the second electrode structure and the liquid crystal layer.

10. The optical device of claim 8 or 9, wherein the liquid crystal lens comprises an optical aperture having mutually orthogonal lateral dimensions each measuring at least approximately 10 mm; and/or preferably wherein the first optical substrate and the second optical substrate each have a thickness independently ranging from approximately 100 to 300 micrometers.

11. The optical device according to any of the claims 8 to 10, wherein the first electrode structure and the second electrode structure each comprise an optically transparent conductive layer; and/or preferably wherein the first electrode structure and the second electrode structure are each disposed within an optical aperture of the liquid crystal lens.

12. A method comprising:
forming an optical device comprising:
a lens including a liquid crystal layer disposed between optical substrates;
a sensor configured to assess an attribute of the liquid crystal layer;
a heat source; and
a controller configured to mediate heat flow between the heat source and the liquid crystal layer based on a signal provided by the sensor; and
directing heat from the heat source to the liquid crystal layer in an amount effective to change the attribute of the liquid crystal layer.

13. The method of claim 12, wherein directing heat from the heat source to the liquid crystal layer increases a temperature of the liquid crystal layer by up to approximately 20°C; and/or preferably wherein directing heat from the heat source to the liquid crystal layer increases a temperature of the liquid crystal layer to a value less than a clearing point (T_{c}) of the liquid crystal.

14. The method of claim 12 or 13, wherein directing heat from the heat source to the liquid crystal layer decreases a viscosity of the liquid crystal layer by an amount of from approximately 1% to approximately 40%; and/or preferably wherein directing heat from the heat source to the liquid crystal layer changes a refractive index of the liquid crystal layer by less than approximately 0.1.

15. The method according to any of the claims 12 to 14, wherein directing heat from the heat source to the liquid crystal layer decreases a response time of the lens by at least approximately 1 ms; and/or preferably wherein directing heat from the heat source to the liquid crystal layer decreases a response time of the lens to less than approximately 100 ms.
